# EUROPÄISCHE PATENTSCHRIFT

(11) **EP 0 570 789 B1**
(45) Veröffentlichungstag und Bekanntmachung des Hinweises auf die Patenterteilung: **02.09.1998**
(21) Anmeldenummer: 93107536.0
(22) Anmeldetag: 10.05.1993
(51) Int. Cl.: A61C 1/08, F21V 15/04

(54) **Ärztliches Behandlungsinstrument mit Behandlungswerkzeug und Beleuchtungseinrichtung**
Medical treatment device having a treatment tool and a lighting system
Appareil pour le traitement médical avec un instrument de traitement et système d'éclairage

(30) Priorität: 21.05.1992 DE 4216873
(43) Veröffentlichungstag der Anmeldung: 24.11.1993
(73) Patentinhaber: KALTENBACH & VOIGT GMBH & CO., 88400 Biberach (DE)
(72) Erfinder: Lingenhöle, Bernhard, W-7951 Mittelbiberach (DE)
(74) Vertreter: Schmidt-Evers, Jürgen, Dipl.-Ing.

(56) Entgegenhaltungen:
- EP-A- 0 173 159
- EP-A- 0 238 778
- EP-A- 0 280 662
- DE-A- 3 513 448
- FR-A- 2 377 083

## Beschreibung

Ein Behandlungsinstrument nach dem Oberbegriff des Anspruchs 1 ist aus der Druckschrift DE-A-3339650 bekannt.

Bei Behandlungsinstrumenten dieser Art ist es bekannt, das für die Beleuchtung der Behandlungsstelle erforderliche Licht durch eine im Behandlungsinstrument angeordnete elektrische Lampe zu erzeugen. Dabei kann die Lampe im vorderen Bereich des Behandlungsinstruments so angeordnet sein, daß ihr Licht unmittelbar auf die Behandlungsstelle gerichtet ist. Insbesondere bei solchen Behandlungsinstrumenten, die aus Gründen der Möglichkeit des Austausches unterschiedlicher Behandlungswerkzeuge und der Desinfektion zweiteilig ausgeführt sind, wobei das vordere Instrumententeil vorzugsweise durch eine Schnellkupplung mit dem hinteren Instrumententeil verbindbar und insbesondere bezüglich letzterem drehbar daran gehalten ist, ist es bekannt, die Lampe im Bereich des hinteren Instrumententeils anzuordnen, vorzugsweise unmittelbar hinter der Trennstelle. Das von der Lampe erzeugte Licht wird mittels eines im vorderen Instrumententeil längs verlaufenden Lichtleiters zu einer Lichtaustrittsöffnung geleitet, die sich im vorderen Bereich des vorderen Instrumententeils befindet, und auf die Behandlungsstelle gerichtet ist. Dabei kann die Lampe in der Drehachse oder Langsmittelachse des Behandlungsinstruments angeordnet sein, wie es in der DE 31 04 239 C2 beschrieben ist, oder die Lampe kann auch exzentrisch angeordnet sein, wie es in der DE 33 32 628 C2 beschrieben ist.

Aufgrund des Motorantriebs für das Behandlungswerkzeug, bei dem es sich sowohl um einen mechanischen Antrieb (DE 33 32 628 C2) oder um einen Turbinenantrieb (DE 31 04 239 C2) handeln kann, werden im Behandlungsinstrument Vibrationen erzeugt, die auch auf die Lampe wirken. Bei den bekannten Ausgestaltungen, bei denen die Lampe im Bereich ihres Steckfußes und/oder ihres Lampenkolbens unbeweglich gehalten ist, führen Vibrationen zu einem vorzeitigen Ausfall der Lampe. Bei Lampen mit einer Glühwendel ist als häufigste Ausfall-Ursache ein Wendelbruch zu verzeichnen.

Nach der DE 33 39 650-A1 ist ein zahnärztliches Behandlungsinstrument mit einem motorbetriebenen Behandlungswerkzeug bekannt, bei dem die Lampe in einer zylindrischen Öffnung des Gehäuses angeordnet ist. Der sich etwa über die halbe Länge der Lampe erstreckende Steckfuß liegt an der Öffnungswandung an. Der Lampenkolben hat einen radialen Abstand zu der Wandung der Öffnung. Die Stromzuführung zur Lampe erfolgt über zwei sich etwa parallel erstreckende und aufeinander zu vorgespannte Flachfederarme aus Metall, die gegen entsprechende Gegenkontakte am Steckfuß hin gekrümmt sind. Trotz dieser Krümmung kann die Lampe wegen der Anlage des Steckfußes an der Öffnungswandung nicht frei schwingen.

Nach der EP 0 238 778 A3 ist ein zahnärztliches Behandlungsinstrument in Form eines Zahnsteinentfernungsgeräts bekannt, bei dem die Lampe in einem zylindrischen Schutzmantel angeordnet ist. Der Steckfuß der Lampe stützt sich mittels einer elastischen Hülse gegen die Innenwandung des Schutzmantels ab. Der Lampenkolben hat einen radialen Abstand zu dem Schutzmantel.

Nach der DE 35 13 448 A1 ist eine Arbeitsplatz-Leuchte bekannt, bei der eine einen Steckfuß aufweisende Lampe im Bereich des Lampenkolbens durch mehrere elastische Federn radial gegenüber der Innenwandung eines Schutzmantels abgestützt ist.

Der Erfindung liegt die Aufgabe zugrunde, bei einem Behandlungsinstrument der hier betrachteten Art die Lebensdauer der Lampe zu verlängern.

Die Aufgabe wird durch die Kombination der im Anspruch 1 angegebenen Merkmale gelöst.

Durch die erfindungsgemäße Lösung wird gewährleistet, daß die Lampe in der Steckfassung schwimmend gelagert ist bzw. frei schwingen kann. Der Schutzmantel und/oder das bzw. die Dämpfungselemente lassen der Lampe bei ihren Schwingungen ein freies Bewegungsspiel. Sollte die Lampe bei größeren Schwingungsamplituden dagegenstoßen, erfolgt dies wegen des elastischen Materials weitgehend erschütterungsfrei.

Ausführungsbeispiele der Erfindung werden nachfolgend anhand der Zeichnungen näher erläutert.

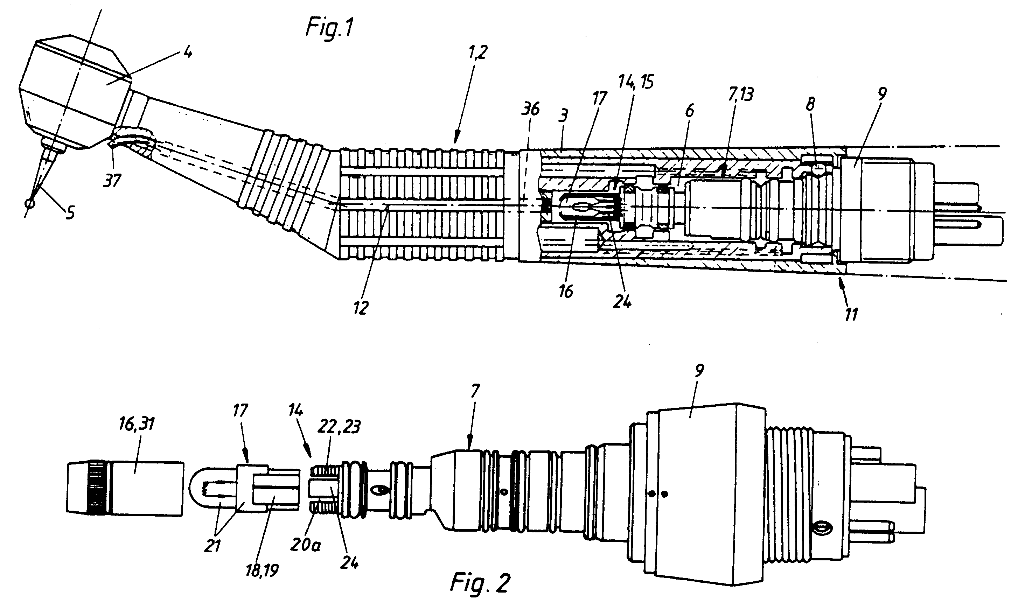

Es zeigt
- Fig. 1: einen vorderen Instrumententeil eines zahnärztlichen Behandlungsinstruments und einen vom hinteren Behandlungsinstrument vorspringenden Kupplungszapfen einer Schnellkupplung für das vordere Behandlungsinstrument;
- Fig. 2: den Kupplungszapfen der Schnellkupplung als Lampenträger in vergrößerter Darstellung, wobei die Lampe aus ihrer Fassung herausgezogen dargestellt ist;
- Fig. 3: die Lampenhalterung in vergrößerter Längsschnitt-Darstellung, wobei die Lampenhalterung gegenüber der Anordnung nach Fig. 2 um 90° um die Längsmittelachse verdreht dargestellt ist;
- Fig. 4 bis 6: abgewandelte Ausgestaltungen der Lampenhalterung jeweils in Längsschnitt-Darstellung.

Beim vorderen Instrumententeil 1 handelt es sich um ein Bohr-Handstück 2, das in üblicher Weise eine Griffhülse 3 mit einem Werkzeugkopf 4 an ihrem vorderen Ende aufweist, von dem ein auswechselbares Bohrwerkzeug 5 seitlich bzw. nach unten absteht. Die Griffhülse 3 weist an ihrem hinteren Ende eine koaxiale Kupplungsausnehmung 6 auf, in die der Kupplungszapfen 7 einsteckbar und durch bekannte Verriegelungsmittel 8 lösbar verriegelbar ist. Der Kupplungszapfen 7 ist Teil eines Kupplungskörpers 9, der im hinteren Instrumententeil 11 aufgenommen ist. Die Kupplungsausnehmung 6 bzw. -buchse und der Kupplungszapfen 7 sind im Querschnitt kreisrund ausgebildet, so daß das vordere Instrumententeil 1 in seiner montierten Stellung um die Längsmittelachse 12 des Behandlungsinstruments frei drehbar ist.

Durch die allgemein mit 13 bezeichnete Schnellkupplung erstreckt sich eine Mehrzahl Medienleitungen, die sich im Kupplungszapfen 7 zunächst axial erstrecken, dessen Außenmantelfläche und die Innenmantelfläche der Kupplungausnehmung 6 radial abgedichtet durchsetzen und dann im Handstück 2 axial weiter geführt sind.

Die Lampenhalterung 14 ist am vorderen Ende des Kupplungszapfens 7 angeordnet. Sie umfaßt eine Steckfassung 15 und ein radial wirksames Dämpfungselement 16 für die Lampe 17, die einen Steckfuß 18 mit achsparallelen Seitenflächen 19 und einen sich vom Steckfuß 18 nach vorne erstreckenden Glaskolben 21 aufweist, der bei der vorliegenden Ausgestaltung länglich bzw. zylindrisch geformt ist.

Die Steckfassung 15 umfaßt eine Steckbuchse 22, die von einer hohlzylindrischen Buchsenwand 23 umgeben ist, und zwei einen Abstand voneinander aufweisende und bezüglich der Längsmittelachse 12 einander gegenüberliegende Flachfederarme 24, die jeweils Z-förmig abgewinkelt sind und mit ihrem hinteren Basisabschnitt 25 in ein Basisteil 26 einfassen und darin z.B. durch Preßsitz befestigt sind. Das Basisteil 26, das vorzugsweise aus isolierendem Material wie Kunststoff besteht, ist ein stopfenförmiger Körper mit einem Flansch an seinem vorderen Ende, und es ist in eine koaxial zur Steckbuchse 22 im vorderen Endbereich des Kupplungszapfens 7 angeordnete Stufenbohrung 27 eingepreßt. Die Flachfederarme 24 sind bezüglich den Basisabschnitten 25 radial nach außen versetzt angeordnet, wobei die durch die Z-Form vorgegebenen Querabschnitte 28 mit ihren hinteren Seiten an der Frontfläche des Basisteils 26 anliegen oder einen gerißgen Abstand davon aufweisen. Die Flachfederarme 24 sind jeweils um eine zugehörige Krümmungsachse 29 mit ihren vorderen Enden geringfügig nach außen gebogen, wobei die Krümmungsachsen 29 quer zur Längsmittelachse 12 und parallel zueinander verlaufen.

Zwischen der Buchsenwand 23 und den Flachfederarmen 24 ist ein Freiraum 20 vorhanden. Vorzugsweise sind in der Buchsenwand 23 den Flachfederarmen 24 gegenüberliegend Aussparungen 20a vorgesehen, in die die Flachfederarme 24 beim Ausbiegen eintauchen können.

Die Lampe 17 ist von einem hülsen- oder kappenförmigen Schutzmantel 31 in einem Abstand a umgeben, der an seinem inneren Ende ein Innengewinde 32 aufweist, mit dem er auf ein Außengewinde 33 an der Buchsenwand 23 aufgeschraubt ist. Im Kappenboden 34 befindet sich koaxial ein Loch 35, durch das hindurch das Licht der Lampe 17 nach vorne strahlt und durch einen Lichtleiter 36 zu einem auf die Behandlungsstelle gerichteten seitlichen Lichtaustritt 37 geführt ist, der im Kopfbereich des Handstücks 2 auf der Werkzeugseite angeordnet ist.

Die in der Lampenhalterung 14 gehaltene Lampe 17 ist im Bereich ihres Steckfußes 18 radial elastisch nachgiebig bzw. schwimmend gehalten und zwar quer zu den Krümmungsachsen 29 aufgrund der Federkraft der Flachfederarme 24, und sie ist längs der Krümmungsachsen 29 zwischen den Flachfederarmen 24 verschiebbar gehalten.

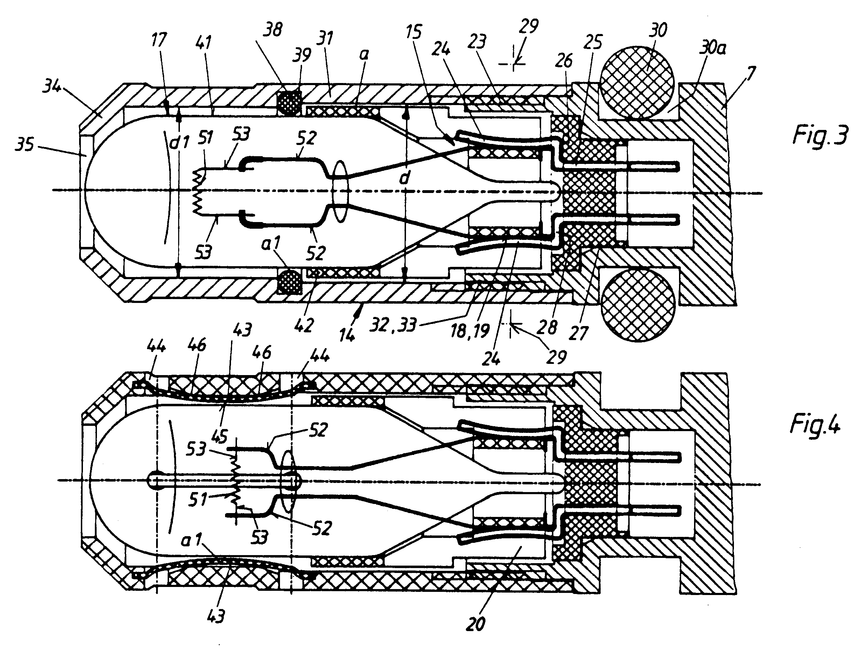

Im Bereich des Glaskolbens 21 ist die Lampe 17 unter Berucksichtigung des vorgenannten Abstands a radial allseitig elastisch nachgiebig und somit federnd abgestützt. Gemäß Fig. 3 dient hierzu ein Ring 38, der in einer Innenumfangsnut 39 im Schutzmantel 31 sitzt. Der Ring 38 kann aus hartelastischem oder auch weichelastischem Material, insbesondere Gummi oder Kunststoff, bestehen und mit seiner Innenseite die Mantelfläche 41 des Glaskolbens 21 in einem geringen Abstand a1 umgeben. Bei der vorliegenden Ausgestaltung befindet sich der Stützring 38 im mittleren Längsbereich des Glaskolbens 21.

Bei der vorliegenden Ausgestaltung weist die Lampe 17 im hinteren Umfangsflächenbereich radial abstehende Ansätze oder einen Umfangsring 42 in einem Abstand a von der Innenmantelfläche des Schutzmantels 31 auf. Es ist vorteilhaft, den Stützring 38 direkt vor dem Umfangsring 42 anzuordnen, wodurch eine Axialsicherung für die Lampe 17 geschaffen ist, weil der Stützring 38 eine Bewegungsbegrenzung für den Umfangsring 42 bildet. Je nach Größe des Stützrings 38 kann es vorteilhaft sein, den Innendurchmesser d hinter dem Stützring 38 etwas größer zu bemessen als den Innendurchmesser d1 vor dem Stützring 38.

Mit 30 ist ein in einer Umfangsnut 30a des Kupplungszapfens 7 angeordneter O-Dichtungsring bezeichnet.

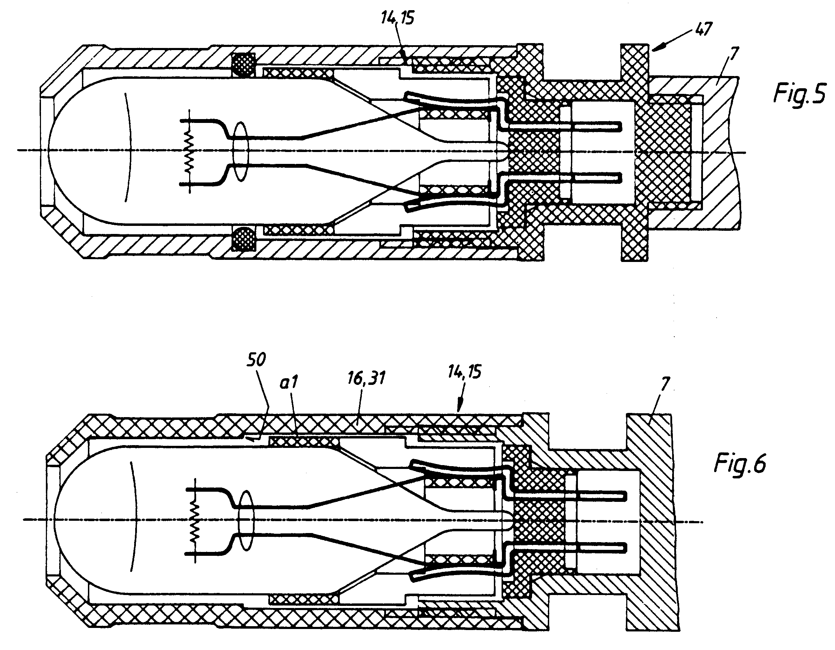

Bei der Ausgestaltung nach Fig. 4 sind anstelle eines Stützrings 38 mehrere, vorzugsweise drei auf dem Umfang gleichmäßig verteilt angeordnete Federelemente 43 vorgesehen, die am Schutzmantel 31 gehalten sind. Bei der vorliegenden Ausgestaltung werden die Federelemente 43 durch sich in Längsrichtung erstreckende bogenförmige Bänder oder Streifen gebildet, deren freie Enden in zumindest innenseitig offenen und hinterschnittenen Verankerungslöchern 44 sitzen. Die nach innen konvex und vorzugsweise bogenförmig geformten Streifen können durch den Schutzmantel 31 vor und hinter dem mittleren Bogenbereich 45 außenseitig gestützt sein, siehe Berührungspunkte 46. Die Endabschnitte der Streifen können so abgekröpft sein, daß sie sich in ein und derselben Ebene erstrecken.

Die Anordnung ist so getroffen, daß die Federelemente 43 in ihrer Normalstellung einen kleinen Abstand a1 vom Glaskolben 21 aufweisen. Die insbesondere nachgiebige Stützfunktion der Federelemente 43 ist dadurch vorgegeben, daß sie entweder aus elastischem Material, insbesondere Kunststoff oder Gummi, bestehen oder radial nach außen elastisch einbiegen können. Hierdurch ist eine in gewissen Grenzen freischwingende Halterung und eine elastisch nachgiebige Abstützung für den Glaskolben 21 gegeben, wobei aufgrund des Abstands a1 ein kleiner Freiraum vorgegeben ist.

Bei den vorbeschriebenen Ausgestaltungen besteht der die Steckfassung 15 bildende Körper, nämlich der vordere Endbereich des Kupplungszapfens 7, aus Metall, wie z.B. Stahl, wobei der Schutzmantel aus einem harten bzw. unnachgiebigen Material bestehen kann, wie Kunststoff oder Metall.

Bei der Ausgestaltung gemäß Fig. 5 ist im Unterschied zu der gemäß Fig. 3 der die Steckfassung 15 enthaltende Körperteil ein zusätzliches Bauteil 47 aus elastisch nachgiebigem Material, wie Kunststoff oder Gummi, das vorzugsweise lösbar am vorderen Ende des Kupplungszapfens 7 befestigt ist, insbesondere verschraubt ist. Hierzu kann ein Schraubzapfen mit Innen- oder vorzugsweise Außengewinde dienen, der durch ein entsprechendes Gegengewinde am Kupplungszapfen 7 vorzugsweise in einer buchsenförmigen vorderseitigen Ausnehmung derselben verschraubt ist.

Im übrigen entspricht die Ausgestaltung des Bauteils 47 dem vorderen Endbereich des Kupplungszapfens 7 mit der Steckfassung 15 wie vorbeschrieben. Die vorbeschriebenen Dampfungselemente 16 können zusätzlich vorgesehen sein

Das Bauteil 47 stellt eine elastisch nachgiebige Lagerung für die Steckfassung 15 dar, die insbesondere radial und gegebenenfalls auch axial wirksam ist. Aufgrund dieser Ausgestaltung kann die Lampenhalterung 14 mit der Steckfassung 15 gegenüber dem Kupplungszapfen 7 radial frei schwingen, wobei sie aufgrund der Elastizität des Bauteils 47 immer in die Mittelstellung geführt wird. Hierbei ist es möglich, den Schutzmantel 31 aus hartem oder ebenfalls aus elastisch nachgiebigem Material zu bilden.

Eine solche Ausgestaltung ist in Fig. 6 dargestellt. Hierbei bildet der Schutzmantel 31 selbst das radiale Dämpfungselement 16, so daß es besonderer elastisch nachgiebiger Dämpfungselemente nicht bedarf. Bei dieser Ausgestaltung ist ein geringer radialer Abstand a1 zwischen der Innenmantelfläche des Schutzmantels 31 und der Umfangsfläche des Glaskolbens 21 bzw. dessen Umfangsrings 42 vorgesehen. Bei dieser Ausgestaltung kann der die Steckfassung 15 haltende Körper ebenfalls aus elastisch nachgiebigem oder vorzugsweise hartem Material bestehen und durch den Kupplungszapfen 7 gebildet sein.

Vor dem Glaskolben 21 ist an der Innenmantelfläche des Schutzmantels 31 eine dem Glaskolben zugewandte Schulter 50 vorgesehen, die im Sinne eines Anschlags die Lampe 17 formschlüssig darin hindert, aus der Steckfassung 15 herauszuwandern.

Bei den vorbeschriebenen Ausführungsbeispielen ist die Lampe 17 eine elektrische Glühlampe mit einem Widerstandsdraht, vorzugsweise in Form einer sich diagonal erstreckenden Wendel 51, die durch zwei Stützdrähte 52 im Glaskolben 21 gehalten und mit an den Seitenflächen 19 angeordneten Kontaktelementen verbunden ist, die mit den Flachfederarmen 24 in Kontakt stehen. Die elektrische Versorgung erfolgt durch Anschluß der rückseitig aus dem Basisteil 26 vorzugsweise herausragenden Basisabschnitte 25 an einen elektrischen Kreislauf (nicht dargestellt).

Bei der Ausgestaltung gemäß Fig. 3 ist die Wendel 51 durch von ihren Enden rechtwinklig abstehende Haltedrähte 53 mit den freien Ende der Stützdrähte 52 verbunden, die in der gleichen Längsmittelebene auf Abstand zu beiden Seiten der Längsmittelachse 12 gabelförmig angeordnet sind.

Besonders vorteilhaft ist die Anordnung der Wendel 51 gemäß Fig. 4 bis 6. Bei dieser Ausgestaltung erstrecken sich die Haltedrähte 53 in Längsrichtung oder koaxial zur Wendel 51 und geradlinig bis zu den freien Enden der Stützdrähte 52. Diese Aufhängung der Wendel 51 trägt ebenfalls dazu bei, Ausfälle der Lampe 17 zu vermeiden. Dies ist darauf zurückzuführen, daß die Wendel 51 bezüglich radialen Schwingungen unempfindlich ist, weil bei ihr sich längs der Längsmittelachse 12 erstreckende Haltedrähte 53 nicht vorhanden sind, bei deren Vorhandensein die Wendel 51 zu Radialschwingungen neigt und deshalb mehr bruchgefährdet ist.

Die erfindungsgemäße Lampenhalterung 14 kann in allen ärztlichen und insbesondere zahnärztlichen Instrumenten verwendet werden, bei denen Vibrationen auftreten. In der Regel wird eine Vibration durch einen motorischen Antrieb des Behandlungswerkzeugs hervorgerufen. Im zahnärztlichen Bereich kann die Anwendung außer bei motor- oder turbinenbetriebenen Handstücken oder Behandlungsinstrumenten, auch bei sog. Zahnsteinentfernungsgeräten oder anderen Instrumenten Anwendung finden. Die Anwendung ist auch nicht darauf beschränkt, daß die Lampe 17 im Behandlungsinstrument zentrisch angeordnet ist, wie es beim vorliegenden Ausführungsbeispiel der Fall ist. Die Lampe kann auch exzentrisch angeordnet sein, was insbesondere bei solchen Behandlungsinstrumenten erforderlich ist, bei denen das Behandlungswerkzeug durch einen Antriebswellenzug angetrieben wird. Bei zweiteiligen Behandlungsinstrumenten kann die Lampenhalterung 14 sowohl im vorderen als auch im hinteren Instrumententeil Verwendung finden.

## Patentansprüche

1. Ärztliches oder zahnärztliches Behandlungsinstrument (1) mit einem motorbetriebenen Behandlungswerkzeug (5), einer aus einem Steckfuß (18) und einem Lampenkolben (21) bestehenden Lampe (17) und einer Steckfassung (15) für den Steckfuß (18) der Lampe, wobei die Steckfassung (15) zwei sich etwa parallel erstreckende und aufeinander zu vorgespannte Flachfederarme (24) aufweist, die gegen den Steckfuß (18) hin gekrümmt sind,
**dadurch gekennzeichnet,**
daß mit der Steckfassung (15) ein den Lampenkolben (21) umgebender hülsen- oder kappenförmiger Schutzmantel (31) verbunden ist, welcher selbst aus elastischem Material besteht und dem Lampenkolben (21) einen geringfügigen freien radialen Bewegungsspielraum (a1) läßt,
oder daß an der Innenseite des Schutzmantels (31) mindestens ein aus elastischem Material bestehendes ringförmiges Dämpfungselement (38) oder wenigstens drei auf dem Umfang verteilt angeordnete Dämpfungselemente (43) vorgesehen ist bzw. sind, welches bzw. welche dem Lampenkolben (21) ein geringfügiges freies radiales Bewegungsspiel (a1) läßt bzw. lassen.

2. Behandlungsinstrument nach Anspruch 1,
**dadurch gekennzeichnet,**
daß der Schutzmantel (31) mit einem die Steckfassung (15) tragenden Basisteil (7) verschraubbar ist.

3. Behandlungsinstrument nach Anspruch 1 oder 2,
**dadurch gekennzeichnet,**
daß das oder die Dämpfungselemente (16; 38; 43) aus Kunststoff oder Gummi bestehen.

4. Behandlungsinstrument nach einem der vorherigen Ansprüche,
**dadurch gekennzeichnet,**
daß das ringförmige Dämpfungselement durch einen im Schutzmantel (31) angeordneten O-Ring (38) gebildet ist.

5. Behandlungsinstrument nach einem der vorherigen Ansprüche,
**dadurch gekennzeichnet,**
daß die Dämpfungselemente (43) jeweils durch einen zur Lampe (17) hin konvex gebogenen Streifen gebildet sind, dessen Enden am Schutzmantel (31) befestigt sind.

6. Behandlungsinstrument nach Anspruch 5,
**dadurch gekennzeichnet,**
daß die Enden der Streifen lösbar am Schutzmantel (31) befestigt sind.

7. Behandlungsinstrument nach Anspruch 5 oder 6,
**dadurch gekennzeichnet,**
daß die Enden der Streifen am Schutzmantel (31) verankert sind.

## Claims

1. Medical or dental treatment instrument (1) having a motor-operated treatment tool (5), a lamp (17) comprising a plug-in base (18) and a lamp bulb (21), and a plug-in lampholder (15) for the plug-in base (18) of the lamp, the plug-in lampholder (15) comprising two substantially parallel-extending flat spring arms (24), which are preloaded towards one another and curved towards the plug-in base (18),
**characterized in**
that connected to the plug-in lampholder (15) and surrounding the lamp bulb (21) is a sleeve- or cap-like protective sheath (31), which is itself made of resilient material and allows the lamp bulb (21) a slight, free, radial motional play (a1),
or that provided at the inside of the protective sheath (31) is at least one annular damping element (38) made of resilient material or at least three damping elements (43) arranged uniformly distributed over the periphery, which allow(s) the lamp bulb (21) a slight, free, radial motional play (a1).

2. Treatment instrument according to claim 1,
**characterized in**
that the protective sheath (31) is screw-fastenable to a base part (7) carrying the plug-in lampholder (15).

3. Treatment instrument according to claim 1 or 2,
**characterized in**
that the damping element or damping elements (16; 38; 43) are made of plastic material or rubber.

4. Treatment instrument according to one of the previous claims,
**characterized in**
that the annular damping element is formed by an O-ring (38) disposed in the protective sheath (31).

5. Treatment instrument according to one of the previous claims, **characterized in**
that the damping elements (43) are formed in each case by a strip, which is bent in a convex manner towards the lamp (17) and fastened by its ends to the protective sheath (31).

6. Treatment instrument according to claim 5,
**characterized in**
that the ends of the strips are fastened to the protective sheath (31) in a detachable manner.

7. Treatment instrument according to claim 5 or 6,
**characterized in**
that the ends of the strips are anchored on the protective sheath (31).

## Revendications

1. Instrument de traitement médical ou dentaire (1) avec un outil de traitement (5) actionné par moteur, avec une lampe (17) comprenant une embase (18) enfichable et une ampoule (21) ainsi qu'avec une douille à enfichage (15) pour l'embase (18) de la lampe, la douille à enfichage (15) présentant deux branches élastiques plates (24) sensiblement mutuellement parallèles et précontraintes en direction l'une de l'autre, qui sont courbées en direction de l'embase (18), caractérisé par le fait qu'une enveloppe protectrice (31) en forme de manchon ou de coiffe entourant l'ampoule (21) est liée à la douille à enfichage (15), enveloppe qui est en un matériau élastique et laisse un faible jeu radial (a1) à l'ampoule de lampe (21), ou par le fait qu'au moins un élément amortisseur (38) annulaire en un matériau élastique ou au moins trois éléments amortisseurs (43) répartis sur la circonférence est ou sont prévu(s) sur la face intérieure de l'enveloppe protectrice, lequel ou lesquels élément(s) laisse(nt) un faible jeu radial (a1) à l'ampoule de lampe (21).

2. Instrument de traitement selon la revendication 1, caractérisé par le fait que l'enveloppe protectrice (31) peut être vissée avec une partie de base (7) qui porte la douille à enfichage (15).

3. Instrument de traitement selon la revendication 1 ou 2, caractérisé par le fait que le ou les élément(s) amortisseur(s) (16, 38; 43) est (sont) en matière plastique ou en caoutchouc.

4. Instrument de traitement selon une des revendications précédentes, caractérisé par le fait que l'élément amortisseur annulaire est formé d'un joint torique (38) disposé dans l'enveloppe protectrice (31).

5. Instrument de traitement selon une des revendications précédentes, caractérisé par le fait que les éléments amortisseurs (43) sont formés chacun d'une bande convexe cintrée en direction de la lampe (17), dont les extrémités sont fixées à l'enveloppe protectrice (31).

6. Instrument de traitement selon la revendication 5, caractérisé par le fait que les extrémités de la bande sont fixées de manière démontable à l'enveloppe protectrice (31).

7. Instrument de traitement selon la revendication 5 ou 6, caractérisé par le fait que les extrémités de la bande sont fixées fermement à l'enveloppe protectrice (31).
